Europäisches Patentamt

European Patent Office

Office européen des brevets

(19)

(11) Publication number: **0 387 831**
**A2**

# EUROPEAN PATENT APPLICATION

(21) Application number: **90104810.8**

(51) Int. Cl.⁵: **C08G 59/48, C08G 59/58**

(22) Date of filing: **14.03.90**

(30) Priority: **14.03.89 JP 62866/89**

(43) Date of publication of application:
**19.09.90 Bulletin 90/38**

(84) Designated Contracting States:
**DE GB**

(71) Applicant: **NIPPON PAINT CO., LTD.**
**2-1-2, Oyodokita Kita-ku**
**Osaka-shi Osaka-fu(JP)**

(72) Inventor: **Suzuki, Yuji**
**3-26-1-417, Kishibenaka**
**Suita-shi, Osaka(JP)**
Inventor: **Nishimura, Tabito**
**5-4-26, Terakawa**
**Daito-shi, Osaka(JP)**
Inventor: **Sasaki, Nobuhiro**
**Kita 1-1005, 221-2, Uchiage**
**Neyagawa-shi, Osaka(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **Resin composition curable at low temperature.**

(57) Disclosed is a resin composition curable at low temperature comprising,
   (A) epoxy resins having an epoxy equivalence of 100 to 4,000;
   (B) $\alpha$-ketoester compounds expressed by the following formula;

$$R-(X- \overset{O}{\overset{\|}{C}} - \overset{O}{\overset{\|}{C}} -O-R_1)$$

[wherein R is an organic group having a molecular weight of 1 to 100,000, X is a carbon, oxygen- or sulfur atom and $-NR_2$, $R_1$ and $R_2$ are independently an alkyl-, alkenyl-, alkynyl-, aryl-, alalkyl-, alkaryl-, cychloalkyl-and heterocyclic group, and n is an integer of 1 or more.] and
   (C)polyamine compound or polyamide compound having a primary and/or secondary amino group; a solid weight ratio of the components (A) and (B) meeting the following relation;
(A)/(B) = 99/1 to 5/95
and an epoxy equivalent of the component (A), and $\alpha$-ketoester equivalent of the component (B) and an active hydrogen equivalent of the component (C) meeting the following relation;
(A) + (B)/(C) = 100/10 to 100/200.

EP 0 387 831 A2

# RESIN COMPOSITION CURABLE AT LOW TEMPERATURE

## FIELD OF THE INVENTION

The present invention relates to a resin composition which is curable even at low temperature (in particular at -30 to 0 °C.

## BACKGROUND OF THE INVENTION

The resin composition curable at low temperature has been used for paint, injection molding, adhesive, electrical insulation, civil engineering and construction, FRP and the like.

The resin compositions curable at low temperature are roughly classified into two-ingredient compositions and three-ingredient compositions depending upon number of indispensable ingredients. Most of the conventional resin compositions, however, have shown problems in that a curing temperature is not sufficiently low and they are adversely affected by a moisture. For example, the two-ingredient compositions which contain epoxy resin/polyamine or polyamide curing agents have been known, but they have shown a problem in that it takes a very long time to harden them or they are hardly cured at 0 °C or less. In addition, other two-gradient resin compositions which comprise polyamine or polyol resin/isocyanate curing agents have been used. they are superior in low temperature curing property, but have shown problems in that they are adversely affected by a moisture in air, whereby being made cloudy. Furthermore, other resin composition which comprise amino compounds/alcoxyoxarylamine curing agents have been disclosed in USP 4,684,710, but it is not disclosed in this publication that they are cured at room temperature or less or at 0 °C or less.

Three-ingredient resin compositions which comprise epoxy resin/acrylate compounds/amine or amide curing agents have been disclosed in Japanese patent Publication Nos. 39615/1988, 12105/1988, 35629/1983, 35630/1983, 44766/1980 and 24992/1978, but that have shown problems in that they are insufficient in low-temperature curing property, they becoming cloudy in the low-temperature curing process, and they showing the blooming penomenon at a high percentage of humidity. Besides, the acrylate compounds are apt to be radically or ionically polymerized, and it therefore is required to prevent the admixture of foreign matters, the radiation oif light, heat and the like, thus being poor in storage stability.

## SAMMARY OF THE INVENTION

It is an object of the present invention to provide a curing resin composition having a sufficient low-temperature curing property and superior in storage stability.

The present invention provides a resin composition curable at low temperature comprising,

(A) epoxy resins having an epoxy equivalence of 100 to 4,000;

(B) r-ketoester compounds expressed by the following formula;

$$R\text{-}(X\text{-} \overset{O}{\overset{\|}{C}} \text{-} \overset{O}{\overset{\|}{C}} \text{-}O\text{-}R_1)$$

[wherein R is an organic group having a molecular weight of 1 to 100,000, X is a carbon, oxygen- or sulfur atom and $-NR_2$-, $R_1$ and $R_2$ are independently an alkyl-, alkenyl-, alkynyl-, aryl-, alalkyl-, alkaryl-, cychloalkyl-and heterocyclic group, and n is an integer of 1 or more.] and

(C) polyamine compound or polyamide compound having a primary and/or secondary amino group; a solid weight ratio of the components (A) and (B) meeting the following relation;

(A)/(B) = 99/1 to 5/95

and an epoxy equivalent of the component (A), and α-ketoester equivalent of the component (B) and an active hydrogen equivalent of the component (C) meeting the following relation;

(A) + (B)/(C) = 100/10 to 100/200.

With the low-temperature curing resin composition according to the present invention, at first a quick curing reaction occurs between the component (B) and the component (C) at low temperatures to reach a certain extent of hardness by a so-called temporary curing and then a so-called principal curing by the component (A) occurs to reach the final maximum hardness. Accordingly, the curing reaction can be made progress and completed without sagging when curing and deformation by an external pressure.

In addition, the reactivity of the α-ketoester groups of the component (B) according to the present invention is smaller than that of the isocyanate group of the isocyanate curing agents. Accordingly, the α-ketoester groups of the component (B) do not react with functional groups have have smaller reactivity than that of an amino group, for example hydroxylic group, at normal temperature. Therefore, general solvents, which do not contain amino compounds, can be used. Furthermore, the α-ketoester group does not react with water even though it is heated to about 80 °C, while the isocyanate group easily reacts with water even at room temperature, so that the clouding by a moisture does not occur.

Besides, the reactivity of the α-ketoester groups of the component (B) according to the present invention is larger than that of the acrylate group of the acrylate curing agents. Accordingly, the α-ketoester groups of the component (B) can quickly start to react with amino compounds having a high reactivity even at about - 30 °C, while the curing reaction of the acrylate group is remarkably slow at about -30 °C. Thus, the low-temperature curing property of the acrylate curing agents can be sufficiently improved by the used of the α-ketoester compounds. In addition, the α-ketoester groups are more difficult to be radically and ionically polymerized than the acrylate gorup due to the absence of olefinic double bonds therein are more stable top foreign matters coming from the outside, heat, light and the like. Accordingly, the curing agents according to the present invention are superior to the acrylate curing agents in storage stability.

DETAILED DESCRIPTION OF THE INVENTION

The component (A) of the present invention is an epoxy resin which has at least one epoxy group in one molecule. The resin has to have an epoxy equivalence of 100 - 4,000, preferably 130 - 1,000. The typical examples of the component (A) according to the present invention include condensation products of phenol compounds and epichlorohydrine or methylepichlorohydrine. If the epoxy equivalence is less than 100, the epoxy resins are poor in compatibility with other ingredients, reactivity or cross-linking capacity and the obtained film is inferior in waterproofness, chemical resistance and corrosion resistance. If the epoxy equivalence is larger than 4,000, the epoxy resins are generally highly viscous or solid, so that in the case where that are used for paints, a large-quantity of solvent is required. Moreover, the strength of the obtained film is undesirably reduced. The phenol compounds include 2,2′-bis(4,4′-hydroxyphenyl)propane (commonly called bisphenol A), halogenated bisphenol A, 2,2′-bis (4,4′-hydroxyphenyl)methane (commonly called bisphenol F), resorcinol, tetrahydroxyphenylethane, phenol, cresol, novolac type polyfunctional phenol obtained by the condensation of phenol or cresol with formalin. In addition, glycidyl esters, such as mono- or diglycidyl esters of alcohols (e.g. butyl alcohol, polyethylene glycol or polypropylene glycol), 1,2,3-tris(2,3-epoxypropoxy)propane, glycidyl esters of aniline derivative, alicyclic epoxides, such as vinyl-cyclohexene dioxide, phthalic diglycidyl ester, hexahydrophthalic diglycidyl ester and tetrahydrophthalic diglycidyl ester, may also be used. Modified epoxy resins include acrylonitrile rubber-modified epoxy resins, urethane-modified epoxy resins, dimeric acid-modified epoxy resins, non-cyclic aliphatic polyglycolether-type epoxy resins, glycol ether-type epoxy resins and polybutadiene-modified epoxy resins.

The component (B) can be any compound having at least one α-ketoester group. Examples of the compounds are oxalic diester compounds, dioxamate compounds, oligo oxalic ester compounds and resins modified with oxalic ester. In order to improve the low-temperature curing property and various kinds of physical property, such as film-strength, water-proofness, solvent resistance and corrosion resistance, and further not to leave the adhesion of the film immediately after the curing, it is preferably to use the compounds which contain a large number of α-ketoester groups per an appointed weight and/or have a high molecular weight. Oligooxalic ester compounds and oxalic ester-modified resins (for example, epoxy resins containing α-ketoester groups, alkyloxalylethyl(meth)-acrylate copolymers, etc.) are particularly preferable. The oxalic diesters include diethyl oxalate, dimethyl oxalate, di-n-propyl oxalate, iso-propyl oxalate, di-n-butyl oxalate, di-sec-butyl oxalate, di-tert-butyl oxalate, di-n-pentyl oxalate, di-n-hexyl oxalate, di-n-heptyl oxalate, di-n-octyl oxalate, di-2-ethylhexyl oxalate, di-n-oxyl oxalate, di-n-decyl oxalate, dipheyl oxalate, dibenzyl oxalate, di-(4-methylphenyl) oxalate, dicyclohexyl oxalate, ethylmethylester oxalate, mono-n-butylethylester oxalate and the like, preferably diethyl oxalate and dibutyl oxalate.

The dioxamate compounds include diethoxalyl-1,2-ethylenediamine, diethoxalyl-1,4-tetramethylenediamnie, diethoxalyl-1,6-hexamethylenediamine, diethoxalyl-phenylenediamine, diethoxalyl-4,4′-diphnylmehtanediamine and the like.

The oligooxalic ester compounds include triethoxalyl-trimethylolpropane, hexaethyoxalyl-dipentaerythritol and the like.

In addition, the oxalic etser-modified resins, that is the high moelcular resins containing at least one α-ketoester group, include compounds obtained by the ester exchange reaction between at least one hydroxyl group of epoxy resin having hydroxylic groups, such as addition product of Epicoat 1001 (manufactrued by Shell Chemical Inc.) or Epicoat 828 (manufactured by Shell Chemical Inc.) and dimethylol propionic acid, and the oxalic diester compounds; homopolymers or copolymers of 2-ethoxalyl-oxyethyl(metha)acrylate or ethoxalyl-(metha)-acrylamide; and $\alpha$-ketoester group-containing homopolymers or copolymers obtained by the ester exchange reaction between at least one hydroxyl group of hydroxyl group-containing acrylic polymers and the oxalic diester compounds.

The compounds having $\alpha$-ketoester groups as the component (B) according to the present invention can be obtained by a dehydrohalegenation reaction or an ester exchange reaction between active hydrogen compounds expressed by the following formula (II);

R-XH     (II)

wherein R and X are the same as mentioned above and ester compounds expressed by the following formula (III):

Y-COCOOR$_1$     (III)

wherein R$_1$ is the same as mentioned above; Y is halogen or -OR$_3$ (wherein R$_3$ is an alkyl group containing 1 to 5 carbon atoms or an aryl group ).

The active hydrogen compounds (R-XH) are compounds which contain an active hydrogen atom directly bonded with an electron attractive atom or group (X), concretely an oxygen atom, sulfur atom, -NR$_2$- or - $\underset{\underset{O}{\|}}{C}$ -O-

. Examples of the compounds are ethylenediamine, tetramethylenediamine, 1,6-hexamethylenediamine, phenylenediamine and the like; trimethylolpropane, pentaerythritol, dipentaerythritol and the like; 2-hydroxyethyl (methy)acrylate and polymers thereof; (meth)-acrylic acid and polymers thereof; epoxy resins, such as Epicoat 1001 and Epicoat 1004 (manufactured by Shell Chemical Inc.), and the like.

The ester compounds which act upon the above described active hydrogen compounds are expressed by the following formula:

Y-COCOOR$_1$     (III)

wherein R$_1$ and Y are the same as mentioned above. They include ethoxalyl chloride, methoxalyl chloride, dimethyl oxalate, diethyl oxalate, dibutyl oxalate and the like.

The reaction of the active hydrogen compounds and the ester compounds in the case where Y is halogen are slightly different from those in the case where Y is -OR$_3$-. In the case where Y is halogen, the reactions are dehydrohalogenation reactions and make progress stoichiometrically, but alkoxalyl halide as the raw material is expensive. In this case, the reactions are conducted in inert solvents [aliphatic hydrocarbons (for example pentane, hexane and heptane), aromatic hydrocarbons (for example benzene, toluene and xylene), alicyclic hydrocarbons (for example cyclohexane, methylcyclohexane and decaline), petroleum hydrocarbons (for example petroleum ether and petroleum benzine ), halogenated hydrocarbons (for example carbon tetrachloride, chloroform and 1,2-dichloroethane), ethers (for example ethyl ether, isopropyl ether, anisol, dioxane and tetrahydrofuran), ketones (for example acetone, methyl ethyl ketone, cyclohexane, actophenone and isophorone), esters (for example ethyl acetate, butyl acetate, propylene glycol, monoethyl ether acetate and cellosolve acetate), acetonitrile, dimetyl formamide, dimethyl sulfoxide and the like] at room temperature to 150 °C (preferably 50 to 100 °C). In addition, methods of removing by-produced hydrogen chloride include a method in which nitrogen is blown into and a method in which HCl is removed in the form of salts thereof by the use of tertiary amines (triethylamine, pyridine and the like). In the case where Y is -OR$_3$, the reaction is an ester exchange reaction and carried out by the use of a remarkable excess of dialkyl oxalate in the presence of a catalyst. The reaction is carried out in dialkyl oxalate of 2 to 20 times, preferably 3 to 8 times, in mol at room temperature to 150 °C, preferably 50 to 120 °C, in the presence of a catalyst and a polymerization inhibitor with removing ethanol. The above described inert solvents may be added to the reaction solution in case of need. The catalyst, which can be used, includes tin compounds (dibutyltin laurate, dibutyltin oxide, monobutyltin triheptate), mixture catalysts (dibutyltin diiodide/tetraphenylantimony iodide, dimethyltin diiodide/hexamethylphosphoric triamide), acidic compounds (p-toluenesulfonic acid, dodecylbenzenesulfonic acid, sulfuric acid, hydorchloric acid, nitric acid, boron trifluoride etherate), basic compounds (triethylamine, 1,4-diazabicyclo[2,2,2]octane, 1,8-diazabicyclo[5,4,0]undecene-7, pyridine, sodium methoxide, sodium ethoxide, t-butoxy potassium, hexamethylphosphoric triamide), metallic oxides or metallic salts (manganese acetate, cobalt acetate, calcium acetate, lithium acetate, zinc acetate, magnesium acetate, antimony trioxide, lead dioxide, ferric chloride, aluminum tri-isopropoxide, tetra-isopropoxy titanium). The polymerization inhibitor includes hydroquinone, p-methoxyphenol, 2,6-di-t-butyl-4-methylphenol, 4-t-butylcatechol, bis-dihydorxybenzylbenzene, 2,2$'$-methylene-bis(6-t-butyl-3-methylphenol), 4,4$'$-thio-bis(6-t-butyl-3-methylphenol), p-nitrosophenol, diisopropyl-xanthogene sulfide, N-nitrosophenyl-hydroxyl amine ammonium salt, 1,1-diphenyl-2-picryl hydrazyl, 1,3,5-triphenyl ferdazyl, 2,6-di-t-butyl-$\alpha$-(3,5-di-t-butyl-4$'$-oxo-2,5-cyclohexadiene-1-iridnene)-p-trioxy, 2,2,6,6-tetramethyl-4-pyperidone-1-oxyl, dithiobenzoylsulfide, p,p'-ditrylsulfide, p,p'-ditryl tetrasulfide, dibenzyltetrasulfide, tetraethyl-thiuramsulfide and the like.

The obtained products are purified by the distillation, recrystallization and column chromatography. The distillation is carried out at room temperature to 180 °C, preferably 50 to 120 °C, under vacuum (normal pressure to 0.01 mmHg) in the presence of air, in the presence of boiling tips or with stirring by means of a magnetic stirrer.

The component (C) used in the present invention is polyamide or polyamide having an active hydrogen. Examples of the compounds are polyamines, such as aliphatic polyamines, (for example, ethylenediamine, diethylenetriamine, triethylenetetramine and tetraethylenepentamine); alicyclic aliphatic polyamines, (for example, xylylenediamine, phenylenediamine, diamino-diphenylmethane, diamino-diphenylsulfone and the like); and degenerated polyamine resins obtained by the reactions between epoxy resins having a molecular weight of 100 to 1,5000 and aliphatic, alicyclic or aromatic polyamines having at least two primary amino groups in one molecule; and the like. In addition, the polyamide include Versamide 115, Versamide 125, Versamide 150 and Zenamide 250 (manufactured by Henkel-Hakusui Inc.) and the like.

The solid weight ratio of the component (A) to the component (B) in solid fraction (A)/(B) is set at 99/1 to 5/95, preferably 97/3 to 25/75. If the ratio (A)/(B) is larger than 99/1, the low temperature curing property is lost, while if it is smaller than 5/95, the adhesion, elasticity, hardness or water-proofness of the resin is deteriorated after the resin is set. Furthermore, among the equivalence number of an epoxy group in the component (A), the equivalence number of an $\alpha$-ketoester group in the component (B) and the equivalence number of an active hydrogen in the component (C) (A) + (B)/(C) = 100/10 to 100/200, preferably 100/70 to 100/120, holds good. If (A) + (B)/(C) is larger than 100/10, the cross-linking reaction between the epoxy resins and the amine resins becomes insufficient, whereby the disadvantages occur in curing property and water-proofness while if it is smaller than 100/200, disadvantages occur in clouding and deterioration of adhesion and water-proofness after the resin is set.

A method of mixing the respective components (A), (B) and (C) is not limited. For example, the three components are simultaneously mixed by the known mixing means to easily obtain the composition according to the present invention. It is, however, preferable that the composition is made two packages. That is to say, the component (A) - epoxy resin- is previously mixed with the component (B) - $\alpha$-ketoester compound - and the component (C) - polyamine compound or polyamide compound- is added to immediately before the time when the composition is used. In order to homogenize or reduce the viscosity, solvents may be used in the resin composition of the present invention. In particular, in the case where any one of the ingredients (A), (B) and (C) is solid, it is preferable to use solvents. Any solvents, which does not react with but dissolves the resin composition, may be used singly or in combination. Such the solvents include aliphatic hydrocarbons, such as hexane, cyclohexane and terpene; aromatic hydrocarbons, such as benzene, toluene and xylene; ketones, such as methyl ethyl ketone and methyl isobutyl ketone; esters, such as ethyl acetate, butyl acetate and butyl cellosolve; halogenated compounds such as trichloroethylene, chloroform, dichloroethane and dichlorobenzene; alcohols, such as ethanol, isopropanol and cellosolve acetate; and the like. Also liquid oxalic diesters, such as oxalic diethyl and oxalic di-n-propyl, and the like may be used as the solvents. They are used in a quantity of generally 0 to 60 % by weight, preferably 0 to 40 % by weight, based on the composition.

In addition to the components (A), (B) and (C), the reaction accelerator, pigment, resinforcing agent, additives, plasticizer and the like may be added in case of need. The reaction accelerator includes tertiaryamine-containing compounds, such as dimethylbenzylamine, 2,4,6-tridimethylaminoethylphenol and triethylenediamine; hydroxyl group-containing compounds, such as phenol, cresol and furfuryl alcohol, and the like. The pigment and reinforcing agent include glass fibers, asbestos fibers, boron fibers, cellulose, polyethylene powders, mineral silicate, mica powders, kaoline, aluminum oxide, aluminum hydroxide, gypsum, antimony trioxide, silica, ballite, zeolite, titanium dioxide, talc, carbon black, graphic, oxide pigments, such as iron oxide, metallic powders, such as zinc powders and aluminum powders, corrosion resistant pigments, such as red lead oxide, lead chromate, zinc phosphate, basic sulfates, lead molybdate, lead cyanamide and strontium chromate, organic pigments, such as phthalocyanine blue and benzidine yellow mate, and the like. The additives includes bituminous substances, such as pitch oil and swollen coal tar, and the like. In addition, the plasticizer includes alkyd resins butadiene copolymers, polyether resin, polyester resin, petroleum resin, chlorinated rubbers, xylene resin and the like.

Furthermore, also acrylonitrile rubber-denatured epoxy resins, dimeric acid-denatured epoxy resins, urethane-denatured epoxy resins, polybutadiene-denatured epoxy resins, and the like, which are used also as a part of the ingredient (A), can be suitably added in case of need to improve the adhesion, corrosion resistance, drying property and relaxation of stress of the coating.

The resin composition curable at low temperature is cured at a low temperature and superior in storage stability, water-proofness, impurity resistance, heat resistance, light resistance and the like.

EXAMPLE

The present invention is below described with reference to the preferred embodiments, but the present invention is not limited by these preferred embodiments.

Preparation of the epoxy resins as the component (A)

Xylol was added to bisphenol A diglycidyl ether having an epoxy equivalence of 475 (Epicoat 1001 manufacture by Yuka Shell Corporation) to form a solution having non-volatile content of 75 %. The resulting compounds were used as the epoxy resins.

Preparation of 2-ethoxylyloxymethyl methacrylate

2-hydroxyethyl methacrylate of 65.1 g (0.5 mol), diethyl oxalate of 365.4 g (2.5 mol), p-toluenesolfonic acid (PTS) as the catalyst of 2 g (10 nmol) and hydroquinone (HQ) as the polymerization inhibitor of 4 g were put in a 4- necked flask of 500 ml provided with a decanter, a thermometer, a stirrer and a nitrogen introducing inlet. The reaction mixture was heated for 4 hours at 120 °C in an atmosphere of nitrogen to distil ethanol of 15 ml (0.25 mol). An excess of oxalic diehtyl was removed from the reaction mixture by means of an evaporator and distilled the reaction product under vacuum, whereby obtaining aimed 2-ethoxalyloxyethyl methacrylate of 38.1 g (76.5 %) in the form of a transparent liquid. The boiling point was 98 °C/0.3 mmHg.

Preparation of α-ketoester resin A as the component (B)

Toluene of 600 g was put in a flask of 2 liters provided with a condenser, a thermostat, a dropping device and a stirrer to keep at 100 °C. A solution comprising 2-ethoxalyloxyethyl methacrylate, which had been synthesized in the above described manner, of 330 g, styrene of 300 g, methyl methacrylate of 270 g, ethyl acrylate of 10 g and azobisisobutylonitrile of 17 g was added to toluene dropwise in 3 hours. After the completion of the addition of the solution, the resulting mixture was heated for 0.5 hours at 100 °C with stirring, followed by adding a solution comprising toluene of 60 g and azobis-isobutylonitrile of 6 g dropwise in one hour. After the completion of the addition of the solution, the resulting mixture was continued to heat for 3 hours at 100 °C with stirring. A copolymer containing nonvolatile content of 57.6 % and having a number average molecular weight of 12,000 was obtained. An ethyloxalyl equivalence of this copolymer was 698 (solid fractions). This copolymer is called α-ketoester resin A.

Preparation of α-ketoester resin B as the component (B)

Bisphenol A-diglycidyl ether having an epoxy equivalence of 185 (Epicoat 828 manufacture by Yuka Shell Corporation) of 185 g, dimethylolpropionic acid of 134 g, xylene of 106 g and dimethylbenzyl amine of 1.3 g were put in a flask of 1 liter provided with a condenser, a thermostat, a stirrer and a depressurizing device and heated for 5 hours at 140 °C. Then, the resulting reaction mixture was heated in vacuun to distil xylol away followed by adding diethyl oxalate of 1,461 g and dibutyltin laurate of 3 g to heat at 130 °C. Ethanol generated was separated by means of a decanter. After the continuation of the heating for 3 hours, an excess of oxalic diethyl was distilled by heating the reaction mixture for 3 hours at 120 °C with depressurizing until 15 mmHg by means of a vacuum pump. An ethyloxalyl equivalence of this resin was 260. This resin is called α-ketoester resin B.

Preparation of α-ketoester resin C as the component (B)

Diethyl oxalate of 500 g (3.42 mol), trimethylolpropane of 31.3 g (0.23 mol) and p-toluene sulfonic acid

6

monohydrate of 1 g (0.0053 mol) were put in a 3-necked flask of 1 liter provided with a stirrer, a cooling pipe and a decanter and heated for 5 hours at 130 °C with stirring. Ethanol of 32.3 g was distilled away. The reaction mixture was cooled and an excess of oxalic diethyl was removed by means of an evaporator and a vacuum pump to obtain a crude product of triethoxalyltrimethylolpropane of 106.1 g (yield: 85 %). This compound is called α-ketoester resin C.

Examples 1 to 6

The reaction raw materials were mixed in the ratios shown in Table 1 at - 5 °C to obtain the resin compositions according to the present invention. The resulting mixtures were applied on a glass plate in a film-thickness of 150 μ by means of an applicator and dried at -5 °C. Obtained coating showed a good condition without being clouded. Then, the drying property and physical properties of the coatings were tested in compliance with JIS K 5400 5, 8, (2, 3) with the results shown in Table 1.

Comparative Examples 1 and 2

THe resin compositions were obtained in the same manner as in Examples 1 to 6 excepting that epoxy acrylate resins were used in placeof the α-ketoester resins. The physical properties of the coatings formed of the obtained resin compositions were evaluated with the results shown in Table 1. The obtained coating showed a good condition without being clouded.

Comparative Example 3

The resin composition was obtained in the same manner as in Example 1 to 6 excepting that the component (B) was not used. The physical properties of the coating from the obtained resin composition were evaluated with the results shown in Table 1. The coating showed a slight adhesion even after one week since the application.

Table 1

| | | | EXAMPLES | | | | | | COMPARATIVE EXAMPLES | | |
|---|---|---|---|---|---|---|---|---|---|---|---|
| | | | 1 | 2 | 3 | 4 | 5 | 6 | 1 | 2 | 3 |
| Weight (g) | (A) | Epoxy resin | 57.0 | 60.2 | 57.0 | 60.2 | 57.0 | 60.1 | 57.0 | 60.2 | 63.3 |
| | (B) | $\alpha$-ketoester resin A | 12.1 | 6.1 | – | – | – | – | – | – | – |
| | | $\alpha$-ketoester resin B | – | – | 2.6 | 1.3 | – | – | – | – | – |
| | | $\alpha$-ketoester resin C | – | – | – | – | 1.5 | 0.7 | – | – | – |
| | | Epoxy acrylate resin[*1] | – | – | – | – | – | – | 7.4 | 3.7 | – |
| | (C) | Amine curing agent [*2] | 27.6 | 27.6 | 27.6 | 27.6 | 27.6 | 27.6 | 27.6 | 27.6 | 27.6 |
| Solid content (A)/(B) by weight | | | 86/14 | 93/7 | 94/6 | 97/3 | 97/3 | 99/1 | 89/11 | 95/5 | 100/0 |
| Equivalence ratio (A)/(B) | | | 90/10 | 95/5 | 90/10 | 95/5 | 90/10 | 95/5 | 90/10 | 95/5 | 100/0 |
| Nonvolatile fractions in the composition (%) | | | 65.9 | 66.7 | 67.8 | 67.6 | 67.4 | 67.4 | 67.1 | 67.3 | 67.4 |
| Drying property | Finger-touch drying time (hour) | | 4 | 8 | 3 | 6 | 3 | 7 | 6 | 10 | 24 |
| | JIS curing time (hour) | | 24 | 36 | 16 | 20 | 16 | 24 | 36 | 48 | >100 |
| Physical properties | Pencil hardness[*3] | | 3B | 4B | 2B | 4B | 3B | 3B | 4B | 6B | <6B |
| | Tensile strength (kg/cm²)[*4] | | 125 | 105 | 150 | 120 | 145 | 130 | 120 | 100 | 40 |

*1): Bisphenol A epoxy-denatured acrylate resin on the market as Ripoxy VR-90-M from Showa Kobunshi Co., Ltd. (nonvolatile fraction-content: 70 %).

*2): An addition production of Epicoat 1001 and diethylene triamine having the active hydrogen equivalence of 138 (solid fractions), the nonvolatile fraction-content of 50 % and the solvent composition of (toluene) : (MIBK) : (IPA)=62:30:8.

*3): The pencil hardness after one week since the application.

*4): The tensile strength was determined by testing a free film by means of the Tensilon (Model HTM-100 manufactured by the Boldwin Corporation) after curing for 2 weeks at ~ 5 °C.

As found from Table 1, the resin compositions according to the present invention using the α-ketoester resins as the ingredient (B) (Examples 1 to 6) have the low-temperature curing property more superior than that of the resin compositions using the epoxy acrylate resins as the component (B) (Comparative examples 1 and 2) and the resin composition using no ingredient (B) (Comparative Example 3), that is for example the former is set more speedily than the latter and the former is superior to the latter in hardness and tensile strength.

## Claims

1. A resin composition curable at low temperature comprising,
(A) epoxy resins having an epoxy equivalence of 100 to 4,000;
(B) α-ketoester compounds expressed by the following formula;

$$R-(X- \overset{O}{\overset{\|}{C}} - \overset{O}{\overset{\|}{C}} -O-R_1)$$

[wherein R is an organic group having a molecular weight of 1 to 100,000, X is a carbon, oxygen- or sulfur atom and -NR$_2$-, R$_1$ and R$_2$ are independently an alkyl-, alkenyl-, alkynyl-, aryl-, alalkyl-, alkaryl-, cychloalkyl-and heterocyclic group, and n is an integer of 1 or more.] and
(C) a polyamine compound or polyamide compound having a primary and/or secondary amino group;
a solid weight ratio of the components (A) and (B) meeting the following relation;
(A)/(B) = 99/1 to 5/95
and an epoxy equivalent of the component (A), an α-ketoester equivalent of the component (B) and an active hydrogen equivalent of the component (C) meeting the following relation;
(A) + (B)/(C) = 100/10 to 100/200.
2. The resin composition according to Claim 1 wherein said epoxy resin (A) is a condensate of a phenol compound and epichlorohydrin.
3. The resin composition according to Claim 1 wherein said α-ketoester compound (B) is an oxalic diester compound, a dioxamate compound, an oligooxalic diester compound or a resin having an oxalic ester residue.
4. The resin composition according to Claim 1 wherein said α-ketoester compound (B) is obtained by reacting a compoujnd represented by
R-XH
wherein R and X are the same as mentioned above,
with an active hydrogen containing compound represented by
Y-COCOOR$_1$

wherein $R_1$ is the same as mentioned above and Y is a halogen atom or $-OR_3$ (wherein $R_3$ is an alkyl group having 1 to 5 carbon atoms or an aryl group).

5. The resin compound according to Claim 1 wherein said polyamide compound is an aliphatic polyamine, alicylic polyamine, an aromatic polyamine or a modified polyamine resin.